# Europäisches Patentamt
# European Patent Office
# Office européen des brevets

(19)

(11) Publication number: **0 014 292**
**B1**

(12) **EUROPEAN PATENT SPECIFICATION**

(45) Date of publication of patent specification: **19.02.86**

(51) Int. Cl.⁴: **C 08 J 3/20, B 29 C 47/00, C 08 L 23/12**

(21) Application number: **79302938.0**

(22) Date of filing: **18.12.79**

(54) Method of compounding melt-forming resins and mica particles.

(30) Priority: **18.12.78 US 970838**
**13.12.79 US 103251**
**13.12.79 US 103301**

(43) Date of publication of application:
**20.08.80 Bulletin 80/17**

(45) Publication of the grant of the patent:
**19.02.86 Bulletin 86/08**

(84) Designated Contracting States:
**BE DE FR GB IT NL SE**

(56) References cited:
**DE-A-2 543 634**
**FR-A-2 124 315**
**FR-A-2 385 768**
**GB-A- 791 234**
**US-A-3 453 356**
**US-A-4 065 532**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**The American Road**
**Dearborn, MI 48121 (US)**
(84) **BE IT NL SE**

(72) Inventor: **Keeney, Allen Junior**
**5725 Textile Road**
**Saline Michigan 48176 (US)**

(74) Representative: **Drakeford, Robert William et al**
**Ford Motor Company Limited 15/448, Research**
**& Engineering Centre Laindon**
**Basildon Essex SS15 6EE (GB)**

Courier Press, Leamington Spa, England.

## Description

This invention relates to methods of compounding mica and melt forming resins.

French Patent Specification FR—A—2385768 discloses that certain chlorinated aliphatic compounds can act as coupling agents for mica and certain melt forming resins, and proposes that the coupling agent, mica and resin be compounded by tumbling, followed by extrusion.

The precise conditions under which such compounding is accomplished are quite critical. Chlorinated aliphatic compounds such as heat sensitive chlorinated waxes herein are subject to reduction or even elimination of beneficial effects upon undesired decomposition with heat. Such decomposition is particularly acute during compounding with melt forming resin and mica particles since the mica particles act as heat sinks that are insulated by the resin during compounding and may, under conditions of high shear and mechanical heat generated there by during intense mixing, cause compounding temperatures in excess of that which causes undesired decomposition, even through cooling is attempted.

On the other hand, low temperatures during such compounding, even if attainable, can lengthen the time required for coupling agents such as chlorinated waxes or other chlorinated aliphatic compounds to exhibit desired effect and consequently cause perhaps less efficient use of equipment or modification of existing equipment so as to extend periods at elevated temperature for desired properties.

According to the present invention, there is provided a method for compounding a melt forming resin with mica particles and a heat sensitive chlorinated hydrocarbon additive, characterised by melting the resin whilst subjecting the resin to high shear, contacting the molten resin with a blend of the mica and the additive, and mixing the molten resin and the blend by subjecting the resin and the blend to low shear kneading.

Compounding in this manner permits temperature control not otherwise easily attainable when mica particles and melt forming resin are admixed under conditions of high shear. Such high shear can impart to the melt of resin and mica particles sufficient mechanical work as to generate temperature increase that is not easily controllable. Kneading or low shear mixing, however, permits effective mixing of the mica and molten resin in short periods when done in accordance with this invention so that the mica particles are not at high temperature for extended periods under shear forces that cause such uncontrollable temperature increase and consequent undesired degradation of heat sensitive additives. Moreover, compounding in accordance with this invention does not expose the mica to shear forces that undesirably break such mica thereby exposing mica surfaces without heat sensitive coupling agents. Surprisingly, mica that is coated with sensitive additives may be compounded with melt forming resins as polypropylene such that the total processing time at high temperature is as little as 15 seconds, or less and yet provide moulding precursors, e.g. pellets, which yield moulded articles with desirable properties.

Even still further, however, very high shear can even cause deterioration of melt forming resin to an extent that the filled resins are undesirably brittle even though other properties may be satisfactory. Thus, for example, the high shear used to provide a molten resin in the process of this invention has to be controlled so as to keep the melt index (ASTM D1238) of the compounded resin preferably below about 15.

The process thus provides for compounding of mica and melt forming resin with such heat sensitive additives such as chlorinated waxes at times less than a minute, if desired, whereby moulding precursors are prepared that may be used in conventional moulding operations to yield moulded objects of highly desirable physical properties.

In one preferred embodiment, the melt forming resin, e.g. polypropylene, is formed into at least two counter rotating, parallel molten streams that contact one another to form a turbulence therebetween, and coated mica particles are introduced into such turbulence allowing their rapid and effective dispersement throughout the molten resin with low shear kneading.

During compounding in accordance with this invention, the melt forming resin receive high shear (prior to mica incorporation) that is sufficient to provide rapidly a molten mass of resin at desired temperatures but insufficient to cause significant change of the resin's properties. For example, it is preferred that a melt forming resin such as polypropylene having a melt index (ASTM D1238) below about 6 not undergo such shear prior to mica incorporation as to raise its melt index (ASTM D1238) above 15, even more preferably such that it is not above 12. Otherwise, final composites will have an undesired brittleness.

On the other hand, it is preferred to provide molten resin at a temperature (prior to incorporation of the mica and additive into the resin) at least about 5°C (10°F) below that temperature at which the additive first releases chlorine containing gas. To achieve maximum benefit of the additive in as short as time as possible, however, incorporation of mica and additive into the resin should be such that the resin has an initial temperature not more than about 33°C (60°F) (preferably, not more than about 28°C (50°F)) below that temperature at which the additive releases chlorine containing gas.

The melt forming resins that may be advantageously compounded with mica and heat sensitive additives in accordance with this invention include commercially available materials that are designed for use in moulding (as by injection, compression, stamping etc.) processes. Of these commercial resins thermoplastics made from monomers comprising olefinic hydrocarbons such as ethylene, propylene, styrene, etc. are of special interest in that they can yield moulded, mica containing articles with high strength and desirable resistance to heat distortion as well as economic advantage.

Melt forming resins made from monomers comprising olefinic aliphatic hydrocarbon monomers as ethylene, propylene and the like can be compounded especially well and particularly desirable results are achieved with melt forming resin sold as polypropylene resins e.g. Gulf Polypropylene 6420 MHP, Hercules Profax 6523 Polypropylene. Normally such resins desirably have intrinsic viscosities above about 1.5 and preferably between about 2.0—2.6 for more expedient processing, although suitable modification will allow processing of resins with other viscosities. An important criterion, however, in selection of desirable melt forming resin is that is remain sufficiently molten at processing temperatures that do not degrade the efficiency of the heat sensitive additives.

Moreover, the melt forming resin preferably has a melt index (ASTM D1238) below about 10, more preferably between about 2—6.

Other resins besides polypropylene resins include polyethylene as well as copolymers made from monomers comprising ethylene, propylene or other lower aliphatic hydrocarbon monomers as copolymers of ethylene and propylene.

Mica fillers suitable for use in this invention are also commercially available. The mica can be generally characterized as being an aluminum silicate mineral that can be cleaved into thin sheets. Examples of commercially available mica filler includes those normally denominated as muscovite, biotite and/or phlogopite micas. Mica filler comprising principally phlogopite mica as Suzorite mica marketed by Marietta Resources International constitutes a mica that allows formation of moulded articles with particularly desirable properties, especially when compounded as herein.

The mica filler comprises thin flakes of mica that are typically made by delamination of mica mineral. Mica, such as that comprising principally phlogopite mica, that is retained on a 100 mesh screen, desirably on a 60 ASTM mesh screen is preferred and normally mica passing through a 20 ASTM mesh screen can be advantageously processed, although mica that is of other size will be suitable. Mica as that sold by Marrietta International as Suzorite 60-S and being referred to as unclassified with respect to aspect ratio can yield desirable composites. Measurement of number average aspect ratio (average diameter of flakes over average thickness) of such mica show them to have low aspect ratio, i.e., below 30, although higher aspect ratio mica may be employed, e.g. 20—200.

The heat sensitive additive for which this invention is particularly advantageous includes chlorinated compounds desirably comprising about 45—85% by weight chlorine and especially, chlorinated hydrocarbons as waxes marketed as Chlorez (Dover Chemical), Chlorowax (Diamond Shamrock), and Kloro-chek (Keil Chemical, a division of Ferro Chemical). Typical molecular weights (weight average) for such chlorinated waxes are between about 500—2000, and especially between about 1000—1500 with desirable results especially seen with waxes having at least 60%, preferably at least 65%, but not more than 85%, preferably not more than 80% by weight chlorine. Chlorinated hydrocarbon waxes containing 70—78% by weight of chlorine are especially suitable. Other chlorinated compounds that may be suitably employed include chlorinated aliphatics with as low as 5% by weight chlorine and molecular weights (weight average) as high as several thousand (e.g. 10,000).

Prior to compounding, at least a portion of the additive is preferably contacted with the mica particles to provide a coating on the particles. For example, the mica and additive in powder or other suitable form can be tumbled together preferably at elevated temperature (to make the additive molten e.g., temperatures preferably between about 60—180°C) to yield a coated mica. Normally, the additive and mica will be admixed in this coating process such that the additive is added between about 0.1—15% (preferably about 1—5%) by weight of the combined mica and additive weight. The raw mica is desirably about 10—80% by weight of the combined weight of the resin and mica.

In another method of making, mica is coated by contacting intimately the mica particles and additive in liquid carrier such as by dispersing powdered additive with mica and adding solvent thereto. Conventional solvents, e.g. aliphatic chlorides may be conveniently used. The latter procedure is described in our copending European Patent Application No. 79302857.2 (Patent No. 0012599).

The preferred apparatus in which compounding is accomplished in accordance with this invention is a twin screw extruder which is, in preferred mode, operated such that the screws are counter rotating. Such twin screw extruders are commercially available with variable screw configurations from Welding Engineer, Inc. The screws of such extruders are similar in configuration, except that the flights of one screw are reversed in angle with respect to the flights of the other screw. The screws are non-intermeshing and counter rotating. One screw is shorter than the other by about the length of three diameters thereby allowing attachment of the barrel to a conventional strand die orifice.

Melt forming resin such as polypropylene is added to one end of the twin screw extruder in an area of flight configuration preferably that subjects it to sufficiently high shear to cause elevated temperature, e.g. 227°C (440°F) and to provide a molten mass of resin prior to addition of the mica and additive blend. (By "molten" herein is meant with reference to resin that particles of resin are at a temperature that can (or does) provide their coalescence with one another). Initially, the barrel of the extruder at this area may be heated to 25 maintain its temperature in a range above about 204°C (400°F), preferably about 215—238°C (420—460°F). During extended use, however, this are is maintained by conventional means at desired processing temperature, e.g. (224—235°C (435—455°F).

The coated mica is thereafter introduced into the molten resin through one or more ports downstream as illustrated in the drawing. Essential to the addition of blended mica and additive particulate is its reduced shear mixing with the molten melt forming resin so as to maintain temperature control.

It is found that high shear mixing as in many conventional extruders causes such work on the mica particles as to cause an uncontrollable temperature rise when compounded at very high speeds 272 kg/hr e.g. (600 lb/hr) or higher. This temperature rise markedly reduces the efficiency of the heat sensitive additives and in one case, e.g. Chlorez (Dover Chemical) with about 74% by weight chlorine causes significant deterioration, at temperatures above about 249°C (480°F).

In order to obtain maximum effect of the additive in as rapid as possible time, the temperature of the resin prior to mica incorporation is carefully controlled. Additionally, the shear applied to the resin is controlled so as to insure that the melt index (ASTM D1238) is preferably maintained below 15 and preferably below 12 or even 10 for most product applications. Thus, the amount of shear that is applied to the resin (prior to mica incorporation) is that amount which does not significantly elevate its melt index but which does provide a temperature high enough for rapid and effective incorporation of mica and additive. Such temperature or "initial mixing temperature" is preferably in a range that is not lower than about 33°C (60°F) below a temperature which would cause evolution of chlorine containing gas from the additive by thermogravametric analysis. More preferably, such initial mixing temperature is not lower than about 14°C (25°F) below that temperature. (Well known thermogravimetric analysis techniques for determination of a temperature of first evolution of chlorine containing gas (i.e. outgassing of the additive) may be used. For example, Chlorez 700 from Dover Chemical and having about 74% by weight chlorine in the wax outgasses at about 249°C (480°F)).

The resin, however, prior to mica and additive incorporation may be at a temperature above the temperature at which there would be outgassing from the additive. This is because incorporation of mica into the resin first provides some cooling to the resin. Thus, for example, at especially high loadings of mica, e.g. 50%—75% or more, even higher initial temperatures for the resin may be tolerated or even advantageous. For most circumstances, however, the initial temperature of the resin is desirably between about 10—60°F below that temperature at which there would be outgassing of the additive.

The mica and resin mix should preferably not be allowed to reach a temperature about 14°C (25°F), more preferably 8°C (15°F) higher than the initial mixing temperature of the resin. Additionally, such temperature should be in a range below that temperature at which chlorine containing gas evolves from the additive. Such a temperature range is accomplished by low shear kneading of the mica particles into the resin. Cooling of the extruder during mica incorporation into the resin may be used.

As previously noted, it is particularly desirable that the melt index of the resin not exceed about 15 (ASTM D1238). In other product applications, however, a higher melt index may be useful. In such a circumstance, very high shear or, in some circumstances, chemical additives (e.g. peroxides) may be used to provide products (e.g. pellets) at a melt index of 20 or higher.

As mentioned, it is preferred to use twin screws that are counter-rotating, and desirably the twin screws are non-intermeshing as are available commercially. By adding the mica into a turbulence created between counter rotating streams of molten resin created by such devices good initial mixing is obtained.

Various flight changes during passage of the resin as well as resin and mica through the twin screw extruder can also be of advantage to promote mixing as will be understood by those in the art. As these are matters within the skill of the art, no further description is believed necessary. The amount of shear applied is such that its melt index (ASTM D1238) is not elevated above about 15, more preferably 12.

It is advantageous to draw a vacuum from the extruder, preferably downstream from coated mica addition. Such vacuum may be desirably, for example, in the range of above about 51 kPa (15 inches of Hg), more preferably about 68 kPa (20 inches Hg) to 75 kPa (22 inch Hg). Such vacuum removes entrapped gases as air or volatiles developed during compounding.

The extruder may be fitted at the end, for example, with a conventional strand die to yield strands that are cooled and diced into composite moulding precursors, e.g. pellets. Moreover, the extruder may also be connected to shaping devices that take strands or other moulding precursors and shape them into desired objects. Furthermore, if desired, the extruder may be fitted with extensions as heated pipes that provide additional time for interaction of the mica and melt forming resin.

Advantageously, however, as mentioned, the entire compound extrusion provides a melt residence, i.e. time that mica and melt forming resin and additive exist in melt form of less than about 30 seconds, more usually less than about 15 seconds. Although additional melt residence is provided by further moulding activities, e.g. injection moulding, pellets compounded in the manner described can provide moulded articles of excellent properties under standard shaping conditions.

The mica in this invention may be replaced in part, as is understood, by other particulates, e.g. talc, glass, calcium carbonate and the like to provide desired modifications, such particulates being added with, for example, the mica or at other convenient processing times.

The following examples are intended to illustrate the invention in currently preferred aspects and should not therefore be interpreted as necessarily limiting the scope thereof for those in the art will recognize other readily apparent modifications within the hereinbefore disclosed invention. Melt index is grams per 10 minutes.

4

Example 1

Using a Welding Engineers 2.0'' Twin-Screw Extruder, equal parts by weight of Gulf Polypropylene 6420 MHP and coated mica are compounded. The mica is coated with Chlorez 700 by tumbling it with heated mica to yield a coating therein. The Chlorez 700 is used at a level that would be about 1% by weight of the combined weight of mica and polypropylene. Chlorez 700 has about 74% chlorine by weight, an average molecular weight of about 1250 and a nominal formula indicating one extra chlorine for the number of carbon atoms present. The raw mica is Suzorite 60-S marketed by Marietta International.

The temperature of the extruder is maintained at 227°C (440°F) and the polypropylene continuously starve fed followed by continuous starve feeding of the so combined mica and additive particles. The polypropylene has a temperature of about 223°C (440°F) and MHP index below 10 before combined mica and additive particle addition. The twin screws are counter-rotating and non-intermeshing and a vacuum of approx. 56 cm (22 inches) is maintained. The resin becomes molten after passage of about 20 cm (8'') along the extruder. The rate of addition yields 600 lb/hr of compounded product which is sent through a strand die to provide strands about 5 mm (1/4'') or less which are thereafter cooled and diced into pellets. The strands exit the extruder at a temperature of about 232°C (450°F). The pellets are molded into standard test bars by injecting at 4140 kPa (600 psi) and 220°C (428°F). The properties of the test bars are as follows:

| Properties | ASTM method | 50% Mica/PP |
|---|---|---|
| Tensile strength, kPa (PSI) | D638-72 | 33302 (4,830) |
| Tensile elongation % | D638-72 | 1.02 |
| Flexural strength, kPa (PSI) | D790-71 | 53712 (7,790) |
| Flexural modulus, kPa (PSI) | D790-71 | $8.790 \times 10^6$ $(1.275 \times 10^6)$ |
| Deflection temperature °C (°F) | D648-72 | |
| 1820 kPa (264 PSI) | | 131 (268) |
| 455 kPa (66 PSI) | | 150 (303) |
| Izod impact, J/m (ft-lbs/in) | B256-73 | |
| Notched | | 0.97 (0.59) |
| Unnotched | | 3.30 (2.00) |
| Specific gravity | D792-70 | 1.375 |
| Mould shrinkage | D955 (F) | .0016 |
| | (T) | .0018 |

The elapsed time between introducing the resin and exiting of the strands from the extruder is within 15 seconds.

Example 2

The procedures of Example 1 are followed except that a modified twin-screw extruder is used, in which the screws in the region in which the resin is melts prior to incorporation of the mica are replaced by screws which provide very high shear to the resin and impart to the resin a melt index of above 20. The filled resin has similar properties to those listed in Example 1 but exhibits brittleness.

Example 3

The procedures of Example 1 are followed except that the mica is coated with a solution of Chlorez 700 in methylene chloride. Essentially comparable results are obtained.

Example 4

The procedures of Example 1 are followed except that the temperature of the extruder is maintained at about 232°C (450°F) and the strands exit at about 238°C (460°F). Similar results are obtained.

Example 5

The pellets of Example 1 are molded by injection molding at 227°C (440°F) at 7579 kPa (1100 psi) into a mold maintained at 49°C (120°F) to yield a crash pad retainer suitable for automotive application. The retainer is flame treated prior to its contact with a polyurethane precursor and the precursor foamed between the retainer and vinyl sheet to provide a mica and polypropylene/foam/vinyl laminate.

Example 6

The procedures of Example 1 are followed except that the chlorinated wax comprises Chlorowax 70, marketed by Diamond Shamrock. Similar results are obtained.

Example 7

The procedures of Example 1 are followed except that the mica is introduced in equal parts by weight into two different ports, the second being downstream from the first. Essentially similar results are obtained.

Example 8

The procedures of Example 1 are followed except that the weight proportions of resin and coated mica particles are 3:2 respectively. Molded test bars show excellent properties.

Example 9

The procedures of Example 1 are followed except that the melt forming resin contains calcium carbonate.

Example 10

The procedures of Example 1 are followed except that the coated mica is added to yield pellets that comprise 5% by weight mica.

Example 11

The procedures of Example 1 are followed except that the weight ratio of coated mica to melt forming resin is 2:1.

Prior to compounding with the resin, the additive may be, rather than coated on the mica, or in addition to being coated on the mica, dry blended with the mica as follows:

Example 12

Using a Welding Engineers 5 cm (2.0″) Twin-Screw Extruder, equal parts by weight of Gulf Polypropylene 6420 MHP and mica (with particulate additive) are compounded. The mica is blended with Chlorez 700 by tumbling it at room temperature in a ribbon blender for fifteen minutes. The Chlorez 700 is used at a level that would be about 1% by weight of the combined weight of mica and polypropylene. Chlorez 700 (available from Dover Chemical) has about 74% chlorine by weight, an average molecular weight of about 1250 and a nominal formula indicating one extra chlorine for the number of carbon atoms present. The raw mica is Suzorite 60-S marketed by Marietta International.

The temperature of the extruder is maintained at 227°C (440°F) and the polypropylene continuously starve fed followed by continuous starve feeding of blended mica and additive particulate. The twin screws are counterrotating and non-intermeshing and a vacuum of approx. 75 kPa (22 inches of mercury) is maintained. The resin becomes molten after passage of about 20 cm (8″) along the extruder). The rate of addition yields 272 kg/hr (600 lb/hr) of compounded product which is sent through a strand die to provide strands about 6 mm (1/4″) or less which are thereafter cooled and diced into pellets. The strands exit the extruder at a temperature of about 232°C (450°F). The pellets are molded into standard test bars by injecting at 4134 kPa (600 psi) and 220°C (428°F). The properties of the test bars are as follows:

| Properties | Dry mixed mica |
|---|---|
| Strength in kPa (psi) x | 39685 (5,760) |
| s | 896 (130) |
| # | 34 (5) |
| Flexural strength in kPa (psi) x | 57807 (8,390) |
| s | 1654 (240) |
| # | 34 (5) |
| Flexural modulus in kPa (psi) x | $9.3 \times 10^6$ ($1.35 \times 10^6$) |
| s | 137800 (20,000) |
| # | 34 (5) |
| Heat deflection temperature in °C (°F) at 1819 kPa (264 psi) x | 135 (276) |
| s | −17 (1) |
| # | −16 (2) |
| at 455 kPa (66 psi) x | 150 (302) |
| s | −16 (2) |
| # | −16 (2) |
| Izod impact notched J/m (ft-lb/in) x | 0.64 (.39) |
| s | 0.00 (.00) |
| # | 6.6 (4) |
| Unnotched J/m (ft-lb/in) x | 1.90 (1.15) |
| s | 0.15 (.09) |
| # | 8.25 (5) |

x=Mean
s=Standard deviation
#=Number of test samples

The elapsed time between introducing the resin and exiting of the strands from the extruder is within 15 seconds.

Example 13

The procedures of Example 1 are followed except that the mica is blended with twice as much Chlorez 700. Essentially comparable results are obtained.

Example 14

The procedures of Example 1 are followed except that the temperature of the extruder is maintained at about 232°C (450°F) and the strands exit at about 238°C (460°F). Similar results are obtained.

Example 15

The pellets of Example 12 are molded by injection molding at 227°C (440°F) at 7579 kPa (1100 psi) into a mold maintained at 49°C (120°F) to yield a crash pad retainer suitable for automotive application. The retainer is flame treated prior to its contact with a polyurethane precursor and the precursor foamed between the retainer and vinyl sheet to provide a mica and polypropylene/foam/vinyl laminate.

Example 16

The procedures of Example 12 are followed except that the chlorinated wax comprises Chlorowax 70, marketed by Diamond Shamrock. Similar results are obtained.

Example 17

The procedures of Example 12 are followed except that the blend of mica and additive is introduced in equal parts by weight into two different ports, the second being downstream from the first. Essentially similar results are obtained.

Example 18

The procedures of Example 12 are followed except that the weight proportion of resin and mica is 3:2 respectively. Molded test bars show excellent properties.

7

**0 014 292**

**Claims**

1. A method for compounding a melt forming resin with mica particles and a heat sensitive chlorinated hydrocarbon additive, characterised by melting the resin whilst subjecting the resin to high shear, contacting the molten resin with a blend of the mica and the additive, and mixing the molten resin and the blend by subjecting the resin and the blend to low shear kneading.

2. A method in accordance with Claim 1, wherein the melt forming resin comprises polypropylene.

3. A method in accordance with Claim 1 or Claim 2, wherein the additive comprises chlorinated wax having 60—85% by weight chlorine.

4. A method in accordance with any one of Claims 1 to 3, wherein the mica comprises phlogopite mica.

5. A method in accordance with any of Claims 1 to 4, wherein compounding is effected at a temperature below 249°C (480°F).

6. A method in accordance with any one of Claims 1 to 5, wherein the mass of molten resin comprises at least two counter-rotating streams of the resin that contact one another.

7. A method in accordance with Claim 6, wherein the mica blend is introduced into the turbulence between the two counter-rotating streams of the resin.

8. A method according to any one of Claims 1 to 7, wherein the resin and the mica are compounded by:—

(A) providing at least two streams of molten resin that are counter rotating with respect to one another and contact one another to provide a turbulence therebetween;

(B) introducing into the turbulence the blend of mica and additive; and

(C) kneading the resin and the blend into a homogeneous or substantially homogeneous melt.

9. A method according to any one of Claims 1 to 8, wherein resin has a melt index (ASTM D1238) not greater than about 15.

10. A method according to Claim 9, wherein the resin has a melt index between 2 and 15.

11. A method according to any one of Claims 1 to 9, wherein the mass of molten resin is contacted with the blend at an initial mixing temperature not less than about 33°C (60°F) below the temperature at which chlorine-containing gas would evolve from the additive.

12. A method according to Claim 11, wherein the initial mixing temperature is between 14 and 33°C (25 and 60°F) below the temperature at which chlorine-containing gas would evolve from the additive.

13. A method according to any one of Claims 1 to 12, wherein the kneading is effected in a temperature range up to 14°C (25°F) above the temperature at which the molten resin is initially contacted with the blend.

14. A method according to any one of Claims 1 to 13, wherein the additive comprises a chlorinated hydrocarbon wax containing from 70 to 78% by weight of chlorine.

15. A method according to any one of Claims 1 to 14, wherein the additive is in the form of a coating on the mica particles.

16. A method according to any one of Claims 1 to 15, wherein the compounded resin, mica particles and additive are formed into pellets.

**Patentansprüche**

1. Verfahren zur Bildung eines Verbunds aus einem eine Schmelze bildenden Harz mit Glimmerteilchen und einem wärmeempfindlichen chlorierten Kohlenwasserstoffzusatz, dadurch gekennzeichnet, dass man das Harz schmilzt, während es einer ·hohen Scherkraft ausgesetzt ist, das geschmolzene Harz mit einem Gemenge aus Glimmer und Zusatz in Berührung bringt sowie das geschmolzene Harz und das Gemenge vermischt, indem man diese einer Knetung bei niedriger Scherkraft unterwirft.

2. Verfahren nach Anspruch 1, worin das eine Schmelze bildende Harz aus Polypropylen besteht.

3. Verfahren nach Anspruch 1 oder 2, worin der Zusatz aus chloriertem Wachs mit 60 bis 85 Gew.-% Chlor besteht.

4. Verfahren nach einem der Ansprüche 1 bis 3, worin der Glimmer aus Phlogopitglimmer besteht.

5. Verfahren nach einem der Ansprüche 1 bis 4, worin der Verbund bei einer Temperatur unterhalb 249°C gebildet wird.

6. Verfahren nach einem der Ansprüche 1 bis 5, worin die geschmolzene Harzmasse aus mindestens zwei miteinander in Berührung stehenden, in entgegengesetzten Richtungen rotierenden Harzströmen besteht.

7. Verfahren nach Anspruch 6, worin das Glimmergemenge in die Turbulenz zwischen den beiden in entgegengesetzten Richtungen rotierenden Harzströmen eingeführt wird.

8. Verfahren nach einem der Ansprüche 1 bis 7, worin der Verbund aus Harz und Glimmer dadurch gebildet wird, dass man

A) mindestens zwei geschmolzene Harzströme vorsieht, die in entgegengesetzten Richtungen rotieren und miteinander in Berührung stehen, um dazwischen Turbulenz zu erzeugen,

B) das Glimmer- und Zusatzgemende in die Turbulenz einführt und

C) das Harz und das Gemenge zu einer homogenen oder weitgehend homogenen Schmelze knetet.

8

9. Verfahren nach einem der Ansprüche 1 bis 8, worin das Harz einen Schmelzindex (ASTM D1238) nicht über etwa 15 aufweist.

10. Verfahren nach Anspruch 9, worin das Harz einen Schmelzindex zwischen 2 und 15 aufweist.

11. Verfahren nach einem der Ansprüche 1 bis 9, worin die geschmolzene Harzmasse mit dem Gemenge bei einer anfänglichen Mischtemperatur in Berührung gebracht wird, die nicht weniger als etwa 33°C unter der Temperatur liegt, bei der sich chlorhaltiges Gas aus dem Zusatz entwickeln würde.

12. Verfahren nach Anspruch 11, worin die anfängliche Mischtemperatur zwischen 14 und 33°C unterhalb der Temperatur liegt, bei der sich chlorhaltiges Gas aus dem Zusatz entwickeln würde.

13. Verfahren nach einem der Ansprüche 1 bis 12, worin das Kneten in einem Temperaturbereich stattfindet, der bis zu 14°C über der Temperatur liegt, bei der das geschmolzene Harz anfänglich mit dem Gemenge in Berührung gebracht wird.

14. Verfahren nach einem der Ansprüche 1 bis 13, worin der Zusatz aus einem chlorierten Kohlenwasserstoffwachs mit 70 bis 78 Gew.-% Chlor besteht.

15. Verfahren nach einem der Ansprüche 1 bis 14, worin der Zusatz in Form eines Ueberzugs auf den Glimmerteilchen vorliegt.

16. Verfahren nach einem der Ansprüche 1 bis 15, worin der Verbund aus dem Harz, den Glimmerteilchen und dem Zusatz zu Tabletten geformt wird.

**Revendications**

1. Un procédé pour combiner une résine formant des masses fondues avec des particules de mica et un additif hydrocarboné chloré thermosensible, caractérisé en ce que l'on fond la résine tout en soumettant la résine à un cisaillement important, en ce que l'on met en contact la résine fondue avec un mélange du mica et de l'additif, et en ce que l'on mélange la résine fondue et le mélange en soumettant la résine et le mélange à un malaxage à cisaillement faible.

2. Un procédé selon la revendication 1, dans lequel la résine formant des masses fondues comprend due polypropylène.

3. Un procédé selon la revendication 1 ou la revendication 2, dans lequel l'additif comprend une cire chlorée qui contient de 60 à 85% en poids de chlore.

4. Un procédé selon l'une quelconque des revendications 1 à 3, dans lequel le mica comprend du mica phlogopite.

5. Un procédé selon l'une quelconque des revendications 1 à 4, dans lequel la combinaison est réalisée à une température inférieure à 249°C (480°F).

6. Un procédé selon l'une quelconque des revendications 1 à 5, dans lequel la masse de résine fondue comprend au moins deux courants en rotation inverse de la résine qui sont au contact l'un de l'autre.

7. Un procédé selon la revendication 6, dans lequel le mélange de mica est introduit dans la turbulence, entre les deux courants en rotation inverse de la résine.

8. Un procédé selon l'une quelconque des revendications 1 à 7, dans lequel la résine et le mica sont combinés par:—

(A) la fourniture d'au moins deux courants de résine fondue, qui sont en rotation inverse l'un vis-à-vis de l'autre, et en contact l'un avec l'autre pour fournir une turbulence entre eux;

(B) l'introduction dans la turbulence de mélange de mica et d'additif; et

(C) le malaxage de la résine et du mélange en une masse fondue homogène ou essentiellement homogène.

9. Un procédé selon l'une quelconque des revendications 1 à 8, dans lequel la résine a un indice de fluidité (ASTM D1238) qui n'est pas supérieur à environ 15.

10. Un procédé selon la revendication 9, dans lequel la résine a un induce de fluidité entre 2 et 15.

11. Un procédé selon l'une quelconque des revendications 1 à 9, dans lequel on met en contact la masse de résine fondue avec le mélange, à une température initiale de malaxage qui n'est pas inférieure à environ 33°C (60°F) en dessous de la température à laquelle un gaz contenant du chlore se dégagerait de l'additif.

12. Un procédé selon la revendication 11, dans lequel la température initiale de malaxage est entre 14 et 33°C (25 et 60°F) en dessous de la température à laquelle un gaz contenant du chlore se dégagerait de l'additif.

13. Un procédé selon l'une quelconque des revendications 1 à 12, dans lequel on effectue le pétrissage dans une zone de température qui peut aller jusqu'à 14°C (25°F) au-dessus de la température à laquelle la résine fondue est mise tout d'abord en contact avec le mélange.

14. Un procédé selon l'une quelconque des revendications 1 à 13, dans lequel l'additif comprend une cire hydrocarbonée chlorée contenant de 70 à 78% en poids de chlore.

15. Un procédé selon l'une quelconque des revendications 1 à 14, dans lequel l'additif est sous la forme d'un revêtement des particules de mica.

16. Un procédé selon l'une quelconque des revendications 1 à 15, dans lequel la résine combinée, les particules de mica et d'additif sont mises sous forme de pastilles.